# EUROPEAN PATENT SPECIFICATION

(11) **EP 1 683 716 B1**
(45) Date of publication and mention of the grant of the patent: **23.05.2007**
(21) Application number: 05001128.7
(22) Date of filing: 20.01.2005
(51) Int. Cl.: B62K 19/46, B62J 7/08

(54) **Vehicular article accomodation device**
Gegenstandshaltevorrichtung für Fahrzeuge
Dispositif de conteneur d'articles pour véhicule

(43) Date of publication of application: 26.07.2006
(73) Proprietor: HONDA MOTOR CO., Ltd., Tokyo (JP)
(72) Inventor: Yamashita, Akihiro c/o Kabushiki Kaisha Honda Gijutsu Kenkyusho, Wako-shi, Saitama (JP); Inoue, Masahiro c/o Kabushiki Kaisha Honda Gijutsu Kenkyusho, Wako-shi, Saitama (JP)
(74) Representative: Rupp, Christian

(56) References cited:
- US-A- 5 060 748
- US-B1- 6 749 036
- PATENT ABSTRACTS OF JAPAN vol. 017, no. 077 (M-1367), 16 February 1993 (1993-02-16) -& JP 04 278887 A (SUZUKI MOTOR CORP), 5 October 1992 (1992-10-05)

## Description

The present invention relates to a vehicular article accommodation device allowing an article stored in a storage box to be fixedly supported in the storage box using fixing means that causes both ends of the article to be releasably engaged with a locking portion provided in the storage box.

A vehicular article accommodation device is known as that disclosed, for example, in Japanese Patent Laid-open No. Hei 4-278887. The article accommodation device disclosed in this document includes a storage box disposed in a rear fender of a motorcycle. The storage box includes a pair of hooks. An article stored in the storage box is fixedly supported in the storage box by locking both ends of fixing means placed over the article onto the pair of hooks.
In addition, US 5,060,748 discloses all the features of the preamble of claim 1.

There is, however, a problem about the conventional article accommodation device, in that types and the number of articles to be stored and fixed in the storage box are limited. The conventional device is unable to respond to variable shapes and quantities of the articles to be stored.

The present invention has been conceived to solve the aforementioned problem with the conventional article accommodation device. An object of the present invention is therefore to provide a vehicular article accommodation device capable of storing and fixing articles in a storage box thereof by flexibly responding to changes in a shape or the number of articles to be stored in the storage box.

To achieve the foregoing object a vehicular article accommodation device is provided which has an arrangement that allows an article stored in a storage box to be fixedly supported thereto using fixing means causing both ends thereof to be releasably engaged with a locking portion provided in the storage box. At least three locking portions are disposed at mutually isolated positions in the storage box, allowing specific locking portions for engaging both ends of the fixing means to be selected.
In a first aspect of the present invention, a first storage recess, and a second storage recess which is shallower than the first storage recess are joined by a wall and are arranged so as to form a mutually continuous row in the storage box. At least one locking portion, among the three locking portions, is located in the storage box at a position that is substantially on the wall between the first and the second storage recesses.

In a second aspect of the present invention, in addition to the arrangement according to the first aspect of the present invention, a distance between a specific locking portion of at least the three locking portions and each of the remainder locking portions is set so as to be substantially the same.

In a third aspect of the present invention, in addition to the arrangement according to the first aspect of the present invention, the fixing means is formed stretchably and elastically.

In a fourth aspect of the present invention, in addition to the arrangement according to the first aspect of the present invention, the first and the second locking portions, which are located substantially on either end in the direction, in which the first and the second storage recesses are lined up in the storage box opening upward, are disposed at levels different from each other in a vertical direction. In addition, the third locking portion, which is situated between the first and the second locking portions in the direction, in which the first and the second storage recesses are lined up, is disposed at a level lower than the first and the second locking portions at a position substantially between the first and the second storage recesses.

According to the first aspect of the present invention, it is possible to store and secure articles in the storage box by flexibly responding to a change in the shape and quantity of the articles through the arrangement, in which both ends of the fixing means are to be engaged with two locking portions selected from among at least the three locking portions in response to the change in the shape and quantity of the articles.
The first and the second storage recesses having a different depth from each other are formed in the storage box and a single locking portion is disposed at a position substantially corresponding to a point between the first and the second storage recesses. This allows articles of a plurality of types with different sizes to be efficiently stored and secured in the storage box.

According to the second aspect of the present invention, it is possible to store and secure articles using the same fixing means even with the changing quantity of articles to be stored or changing fixing position in the storage box.

According to the third aspect of the present invention, it is possible to respond to an even greater change in the type of articles to be stored and secured in the storage box by placing the fixing means of a kind elastically over an article while letting a length thereof change.

According to the fourth aspect of the present invention, it is possible to dispose each of the locking portions so as to effectively secure the articles stored in the first and the second storage recesses.
FIG. 1 is a side elevational view showing a four-wheel buggy.
FIG. 2 is an enlarged view showing a principal part of the four-wheel buggy shown in FIG. 1.
FIG. 3 is a perspective view showing a rear fender.
FIG. 4 is a partly plan view showing the rear fender.
FIG. 5 is a view showing a storage box having a first article and a second article stored and secured therein, as viewed on arrow 5-5 of FIG. 2.
FIG. 6 is a cross-sectional view taken along line 6-6 of FIG. 5.
FIG. 7 is a view on arrow 7 of FIG. 6.
FIG. 8 is a view showing the storage box with the first article stored therein, as viewed from the same direction as in FIG. 5.
FIG. 9 is a cross-sectional view taken along line 9-9 of FIG. 8.
FIG. 10 is a view showing the storage box with the second article stored therein, as viewed from the same direction as in FIG. 5.
FIG. 11 is a cross-sectional view taken along line 11-11 of FIG. 10.

A preferred embodiment of the present invention will be described with reference to the accompanying drawings.

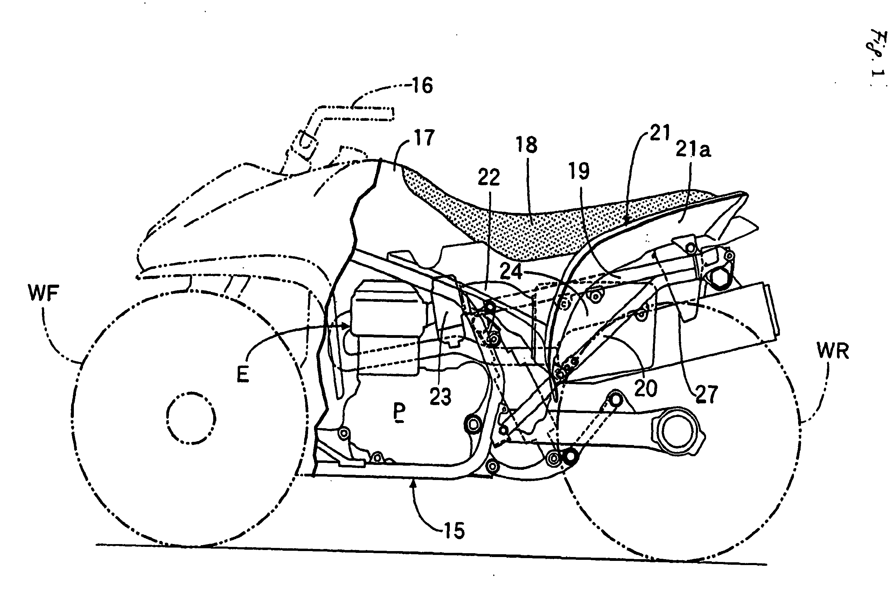

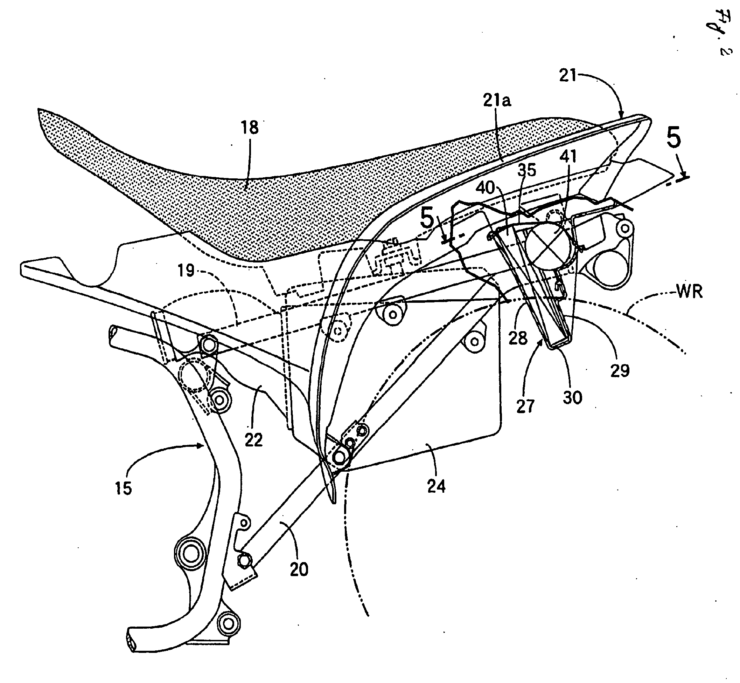

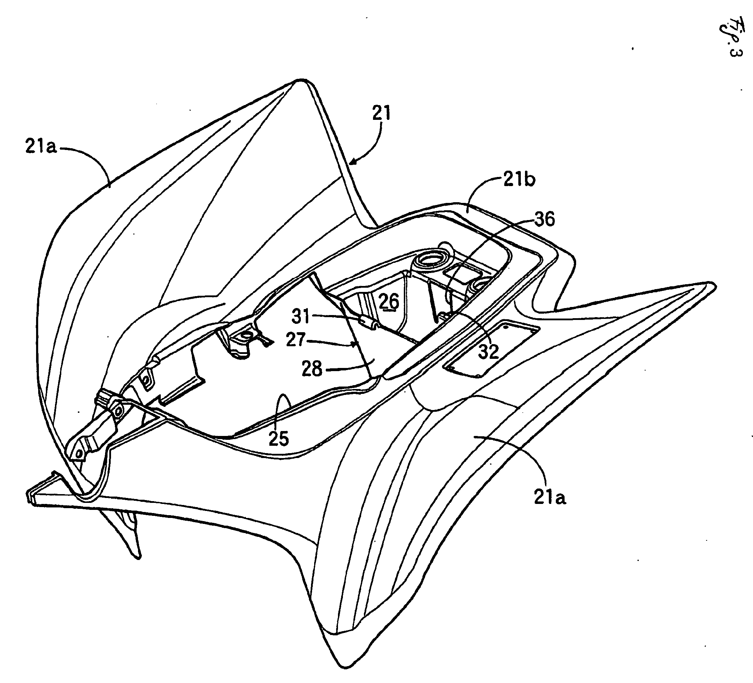

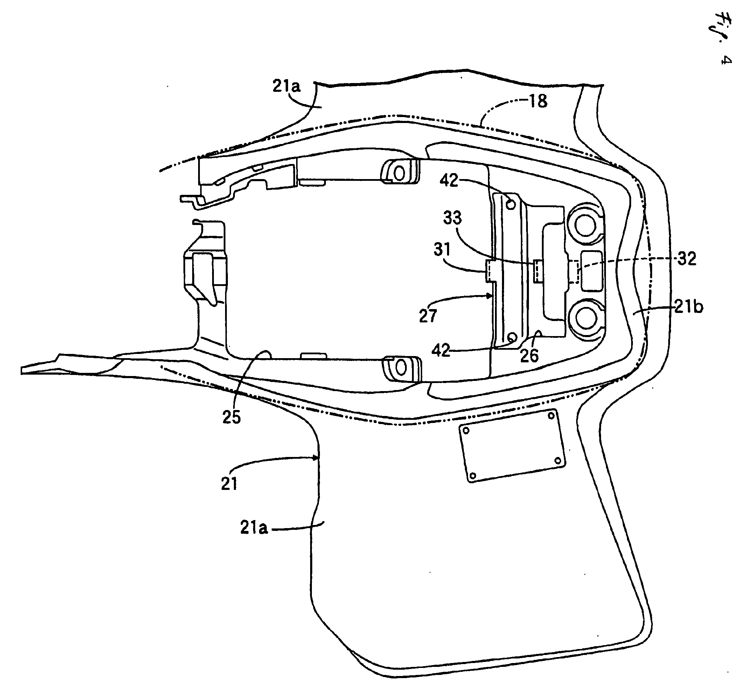

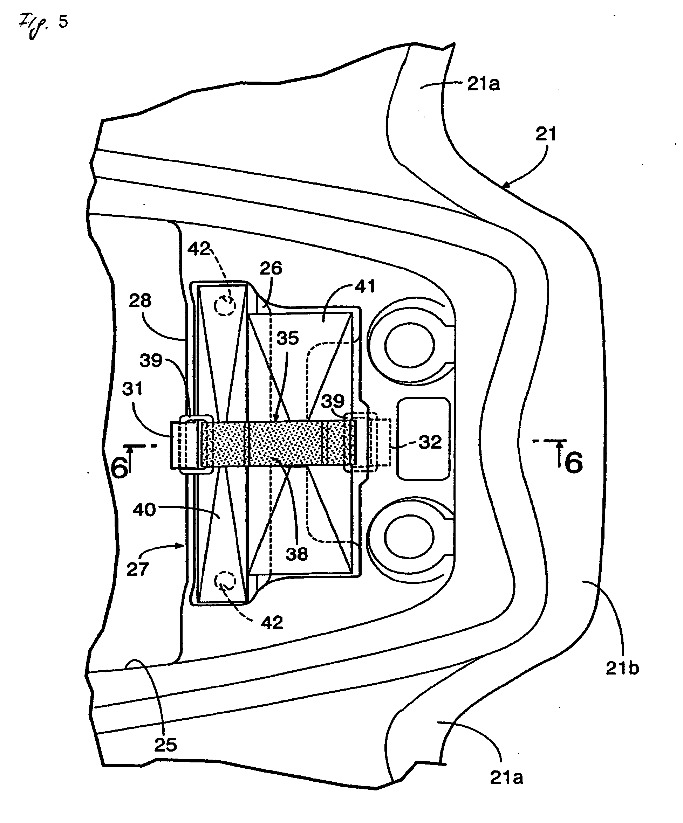

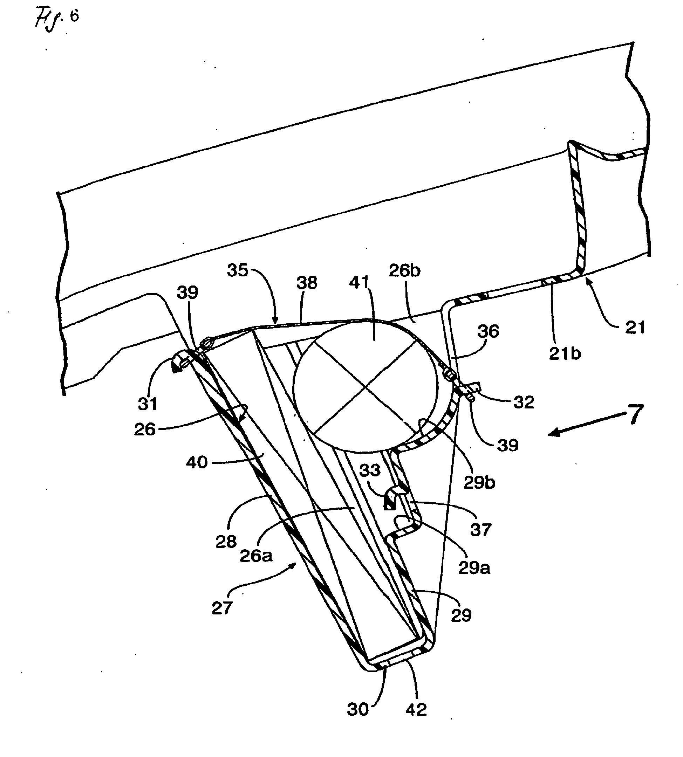

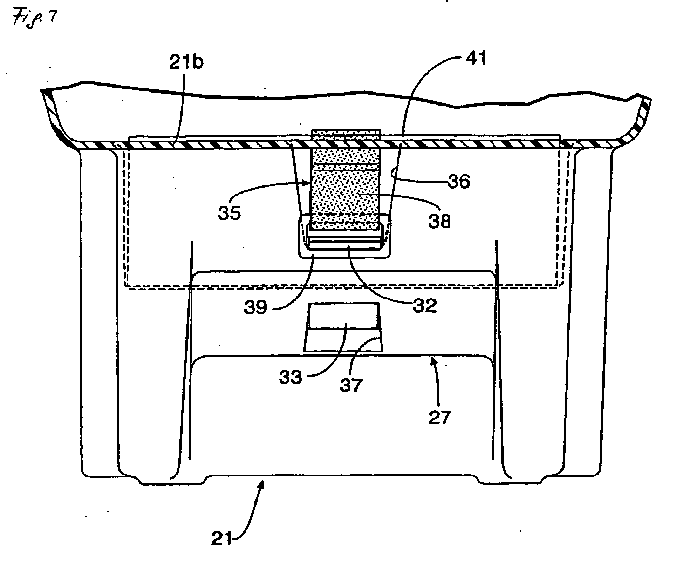

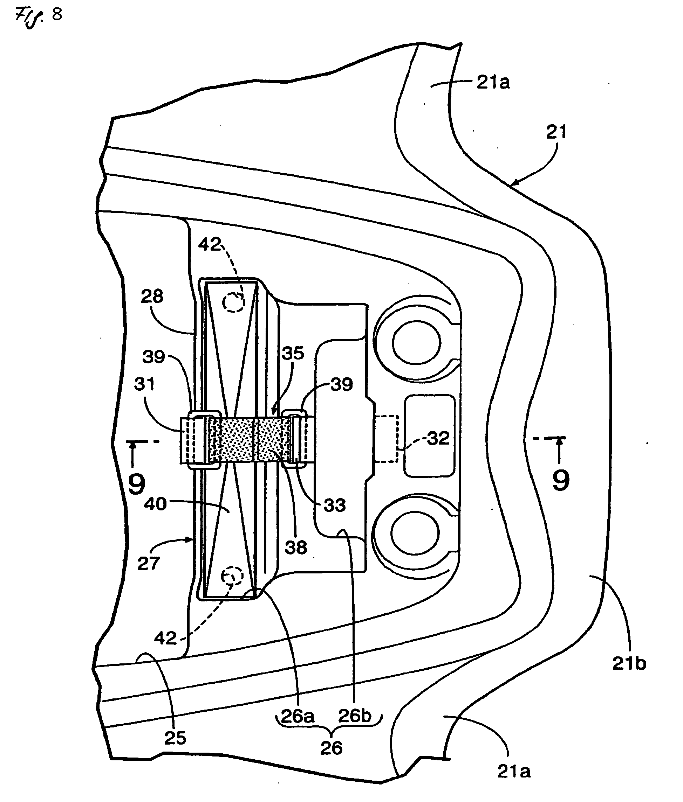

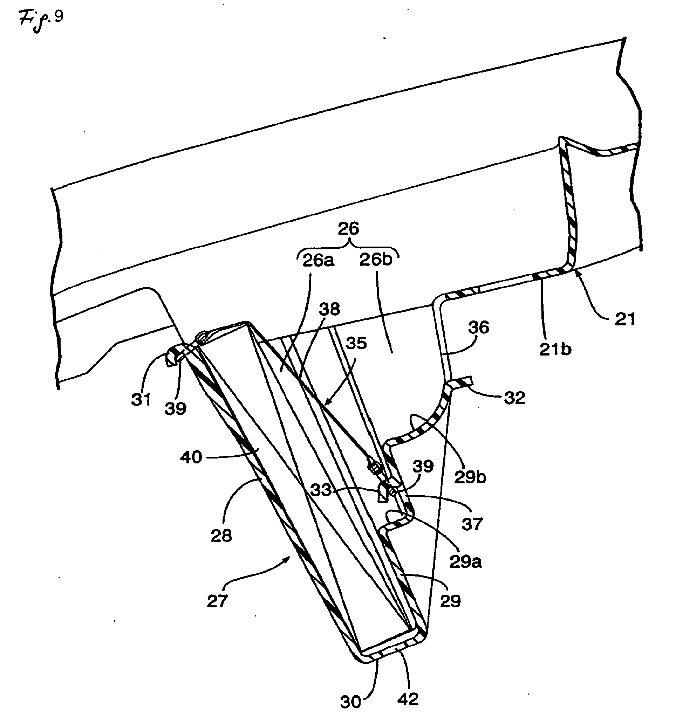

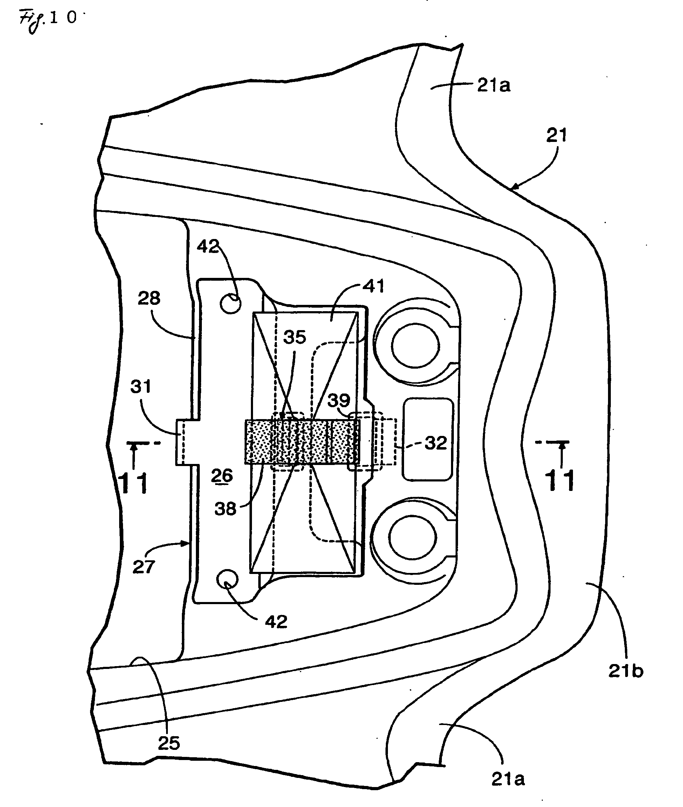

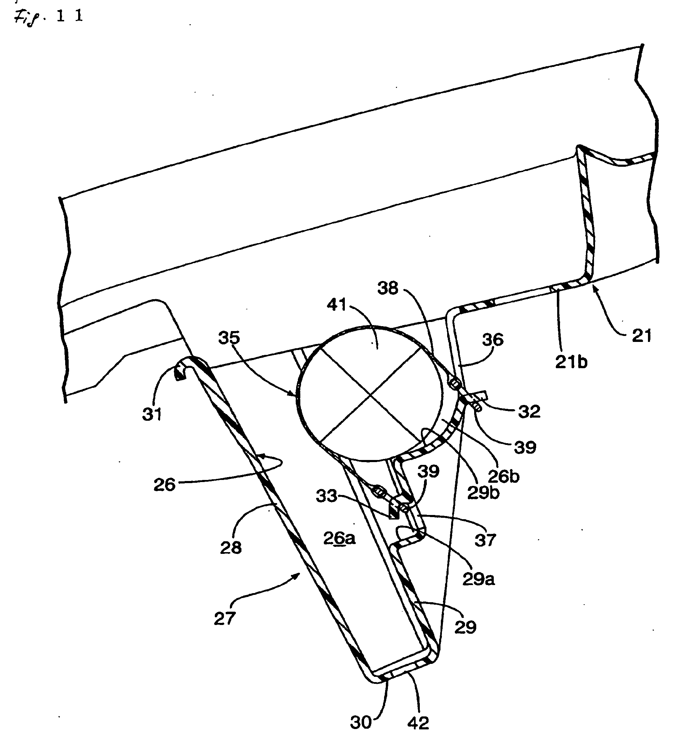

FIGS. 1 through 11 show a preferred embodiment of the present invention. FIG. 1 is a side elevational view showing a four-wheel buggy. FIG. 2 is an enlarged view showing a principal part of the four-wheel buggy shown in FIG. 1. FIG. 3 is a perspective view showing a rear fender. FIG. 4 is a partly plan view showing the rear fender. FIG. 5 is a view showing a storage box having a first article and a second article stored and secured therein, as viewed on arrow 5-5 of FIG. 2. FIG. 6 is a cross-sectional view taken along line 6-6 of FIG. 5. FIG. 7 is a view on arrow 7 of FIG. 6. FIG. 8 is a view showing the storage box with the first article stored therein, as viewed from the same direction as in FIG. 5. FIG. 9 is a cross-sectional view taken along line 9-9 of FIG. 8. FIG. 10 is a view showing the storage box with the second article stored therein, as viewed from the same direction as in FIG. 5. FIG. 11 is a cross-sectional view taken along line 11-11 of FIG. 10.

Referring first to FIG. 1, a pair of front wheels WF .. and a pair of rear wheels WR .. are suspended at a front portion and a rear portion, respectively, of a vehicle body frame 15 included in the four-wheel buggy. A steering handlebar 16, a fuel tank 17, and a straddle type seat 18 are disposed, in that order from a front toward a rear, on an upper portion of the vehicle body frame 15. A power unit P including an engine E for driving the pair of rear wheels WR .. is mounted on the vehicle body frame 15 downward the fuel tank 17 and the seat 18, situated between the front wheels WF .. and the rear wheels WR ...

Referring also to FIG. 2, the vehicle body frame 15 further includes a pair of right and left seat rails 19 .. and a pair of right and left back stays 20 ... The pair of right and left seat rails 19 .. extends upwardly rearwardly. The pair of right and left back stays 20 .. is located downward of the pair of right and left seat rails 19 .. and extends upwardly rearwardly. The pair of back stays 20 .. inclines upwardly rearwardly at an angle more acute than the pair of seat rails 19 ... Rear ends of the pair of back stays 20 .. are connected to rear ends of the pair of seat rails 19 ...

Referring to both FIGS. 3 and 4, the pair of rear wheels WR .. is covered with a rear fender 21 supported by the seat rails 19 .. and the back stays 20 ... The rear fender 21 may be formed, for example, from a synthetic resin. The rear fender 21 integrates a pair of right and left fender portions 21a, 21a with a central connecting portion 21b. The pair of right and left fender portions 21a, 21a is formed arcuately so as to cover the pair of rear wheels WR .. from an upward. The central connecting portion 21b connects the pair of right and left fender portions 21a, 21a.

The central connecting portion 21b of the rear fender 21 is covered by the seat 18 that can be opened and closed. An opening 25 is formed in the central connecting portion 21b at a portion forward from a middle portion in a fore-aft direction. The opening 25 is for disposing an air cleaner 24 connected to the engine E of the power unit P via an intake pipe 22 and a carburetor 23. In addition, a storage box 27 forming a storage recess 26 that is downwardly recessed is integrally provided for the central connecting portion 21b at a position rearward of the opening 25.

Referring to FIGS. 5 through 7, the storage box 27 is formed as follows. Specifically, in a longitudinal cross-sectional shape thereof, the storage box 27 is formed by a front wall 28, a rear wall 29, and a bottom wall 30. The rear wall 29 opposes the front wall 28 from a rearward. The bottom wall 30 connects a lower end of the front wall 28 with a lower end of the rear wall 29. The front wall 28 is formed into a flat surface inclined upwardly toward a front. The bottom wall 30 having, for example, a pair of drain holes 42, 42 is provided at the lower end of the front wall 28 in a connected row arrangement. The bottom wall 30 is substantially at right angles with the front wall 28. The rear wall 29 is formed, for example, so as to have a greater distance from the front wall 28 in a stepwise fashion in three steps as the rear wall 29 rises upward. The rear wall 29 may include a lower stage 29a and an upper stage 29b. The lower stage 29a is a flat portion facing upward. The upper stage 29b is disposed upward of the lower stage 29a and faces upward. The upper stage 29b is arcuately formed, swelling downwardly.

The storage recess 26 in the storage box 27 includes a first and a second storage recess 26a, 26b arranged mutually continuously in the fore-aft direction. The first storage recess 26a is deeply formed with the bottom wall 30 used as a bottom thereof. The second storage recess 26b continuously extending from the rear of the first storage recess 26a is formed shallowly with the upper stage 29b used as a bottom thereof. The second storage recess 26b is shallower than the first storage recess 26a.

The storage box 27 is provided with at least three locking portions. According to the preferred embodiment of the present invention, the storage box 27 includes a first, a second, and a third locking portion 31, 32, 33. These locking portions 31, 32, 33 are disposed at a central portion in a width direction, being mutually apart from each other.

The first locking portion 31 and the second lock portion 32 are disposed substantially on either end in a direction, in which the first storage recess 26a and the second storage recess 26b are lined up, that is, in the fore-aft direction. The first and the second locking portions 31, 32 are also disposed at mutually different levels in a vertical direction in the storage box 27. The third locking portion 33 is situated between the first and the second locking portions 31, 32 along the direction, in which the first storage recess 26a and the second storage recess 26b are lined up, that is, the fore-aft direction. The third locking portion 33 is located at a level lower than the first and the second locking portions 31, 32. The third locking portion 33 is provided in the storage box 27 at a position that is substantially between the first and the second storage recesses 26a, 26b.

The first locking portion 31 is provided on an upper end of the front wall 28. The first locking portion 31 is formed into an upwardly protruding arc, protruding toward a side of the opening 25. The second locking portion 32 is located on a level lower than the first locking portion 31. The second locking portion 32 is provided in a protruding condition rearwardly from the storage box 27. The second locking portion 32 forms a continuation from an upper end of a rear portion of the upper stage 29b. The third locking portion 33, which is the lowest in level among the three locking portions, is provided in a protruding condition from the rear wall 29, protruding into the storage recess 26 between the lower stage 29a and the upper stage 29b.

Of the first through third locking portions 31, 32, 33, a specific locking portion or the first locking portion 31 is disposed substantially at an equal distance from each of the remainder locking portions, or the second and the third locking portions 32, 33.

Both ends of a fixing band 35 as fixing means can be releasably engaged with each of the first through third locking portions 31, 32, 33. An operation hole 36 is provided in the rear wall 29 upward of the second locking portion 32. The operation hole 36 allows either one of the two ends of the fixing band 35 to be releasably operated onto the second locking portion 32. Further, there is also provided an operation hole 37 in the rear wall 29 at a portion corresponding to the third locking portion 33. The operation hole 37 allows either one of the two ends of the fixing band 35 to be releasably operated onto the third locking portion 33.

The fixing band 35 is formed stretchably and elastically as follows. Specifically, ring-shaped engagement members 39, 39 that can be engaged with any of the first through third locking portions 31, 32, 33 are attached to both ends of a rubber band 38.

A first article 40 that may, for example, be an owner's manual or other having a shape of a rectangular parallelepiped, can be suitably accommodated in the storage box 27. A second article 41 that may, for example, be a bag of a tool kit rounded into a shape of a circular cylinder, can also be suitably accommodated in the storage box 27. The first and the second articles 40, 41 can be stored and secured in the storage box 27 as follows. Specifically, referring to FIGS. 5 through 7, the first article 40 is stored in a front portion of the storage box 27 along the front wall 28. The second article 41 is stored in the rear of the first article 40 in the storage box 27 such that part thereof is placed on the upper stage 29b of the rear wall 29. The fixing band 35 is then commonly placed over the first and the second articles 40, 41, with both ends thereof being engaged with the first and the second locking portions 31, 32, respectively.

Referring to FIGS. 8 and 9, only the first article 40 may be stored and secured in the storage box 27. In this case, it is only necessary that the fixing band 35 with both ends to be engaged with the first and the third locking portions 31, 33, respectively, be placed over the first article 40 stored in the front portion of the storage box 27 along the front wall 28.

Referring to FIGS. 10 and 11, only the second article 41 may be stored and secured in the storage box 27. In this case, it is only necessary that the fixing band 35 with both ends to be engaged with the second and the third locking portions 32, 33, respectively, be placed over the second article 41 stored in the rear portion of the storage box 27 such that part thereof rests on the upper stage 29b of the rear wall 29.

In operation, the preferred embodiment of the present invention will be described. The storage box 27 is provided in the rear fender 21 so as to be covered with the openable seat 18. At least three locking portions are provided for the storage box 27 so that the first and the second articles 40, 41 or the like stored in the storage box 27 can be fixedly supported in the storage box 27 using the fixing band 35. According to the preferred embodiment of the present invention, the first, the second, and the third locking portions 31, 32, 33 are disposed at positions mutually apart from each other in the storage box 27. Both ends of the fixing band 35 are to be releasably engaged with selected two of the three locking portions 31 to 33.

It is therefore possible to store and secure articles in the storage box 27 by flexibly responding to changes in the shape and quantity of the articles. This is specifically accomplished by engaging both ends of the fixing band 35 with two specific locking portions selected from among the first, the second, and the third locking portions 31, 32, 33 according to a change made in the shape and/or the quantity of the articles to be stored. More specifically, a fixing band engagement state is changed as detailed in the following according to the shape and/or the quantity of the articles to be stored. In a first state, referring to FIGS. 5 through 7, the both ends of the fixing band 35 are engaged with the first and the second locking portions 31, 32 so that the first and the second articles 40, 41 are stored and secured in the storage box 27. In a second state, referring to FIGS. 8 and 9, the both ends of the fixing band 35 are engaged with the first and the third locking portions 31, 33 so that the first article 40 is stored and secured in the storage box 27. In a third state, referring to FIGS. 10 and 11, the both ends of the fixing band 35 are engaged with the second and the third locking portions 32, 33 so that the second article 41 is stored and secured in the storage box 27.

In addition, of the first through third locking portions 31, 32, 33, a specific locking portion or the first locking portion 31 is disposed substantially at an equal distance from each of the remainder locking portions, or the second and the third locking portions 32, 33. This allows the same fixing band 35 to be used for storing and securing an article in the storage box 27 even when there is a change in the quantity of articles to be stored or in the fixing position inside the storage box 27. Specifically, the same fixing band 35 can be used in both of the following cases. That is, in one, the both ends of the fixing band 35 are engaged with the first and the second locking portions 31, 32 so that the first and the second articles 40, 41 are stored and secured in the storage box 27 as shown in FIGS. 5 through 7. In the other, the both ends of the fixing band 35 are engaged with the first and the third locking portions 31, 33 so that the first article 40 is stored and secured in the storage box 27 as shown in FIGS. 8 and 9.

The fixing band 35 is formed stretchably and elastically. This makes it possible to place the fixing band 35 of a kind elastically over an article by letting a length of fixing band 35 change. This enables responding to an even greater change in the type of articles to be stored and secured in the storage box 27.

The first storage recess 26a, and the second storage recess 26b which is shallower than the first storage recess 26a, are arranged so as to form a mutually continuous row in the storage box 27. The third locking portion 33, among the first through the third locking portions 31, 32, 33, is located in the storage box 27 at a position that is substantially between the first and the second storage recesses 26a, 26b. This allows the articles 40, 41 of a plurality of types with different sizes to be efficiently stored and secured in the storage box 27.

Moreover, the first and the second locking portions 31, 32, which are located substantially on either end in the direction, in which the first and the second storage recesses 26a, 26b are lined up (in the fore-aft direction according to the preferred embodiment of the present invention) in the storage box 27 opening upward, are disposed at levels different from each other in the vertical direction. In addition, the third locking portion 33, which is situated between the first and the second locking portions 31, 32 in the direction, in which the first and the second storage recesses 26a, 26b are lined up, is disposed at a level lower than the first and the second locking portions 31, 32 at a position substantially between the first and the second storage recesses 26a, 26b. This allows each of the locking portions 31 to 33 to be disposed so as to effectively secure the articles 40, 41 stored in the first and the second storage recesses 26a, 26b.

The present invention has been described with reference to a preferred embodiment, and it should be understood that various changes and modifications may be made in the invention without departing from the spirit and scope thereof.

The present invention is not applied solely to the storage box 27 provided in the rear fender 21 of the four-wheel buggy. Rather, the present invention may also be applicable, for example, to cases associated with a storage box provided in a rear fender, a vehicle body cover, or the like of a motorcycle.

The foregoing descriptions have been made referring to an exemplary case, in which the first through the third locking portions 31, 32, 33 are provided for the storage box 27. It goes without saying that four or more locking portions may be provided for the storage box.

It may further be possible to store and secure a U-shaped lock in the storage box 27.

26a: first storage recess
26b: Second storage recess
27: Storage box
31: First locking portion
32: Second locking portion
33: Third locking portion
35: Fixing band as fixing means
40, 41: Article

## Claims

1. A vehicular article accommodation device having an arrangement for allowing articles (40, 41) stored in a storage box (27) to be fixedly supported thereto using fixing band means (35) causing both ends of the fixing band to be releasably engaged with locking portions (31, 32, 33) provided in the storage box (27),
wherein at least three locking portions (31 to 33) are disposed at mutually isolated positions in the storage box (27), allowing specific locking portions (31 to 33) for engaging both ends of the fixing band means (35) to be selected, wherein a first storage recess (26a), and a second storage recess (26b) which is shallower than the first storage recess (26a) are joined by a wall (29) and are arranged so as to form a mutually continuous row in the storage box (27),
**characterized in that**
at least one locking portion (33), among the three locking portions (31 to 33), is located in the storage box (27) at a position that is substantially on the wall (29) between the first and the second storage recesses (26a, 26b).

2. The vehicular article accommodation device according to claim 1,
wherein a distance between a specific locking portion (31) of at least the three locking portions (31 to 33) and each of the remainder locking portions (32, 33) is set so as to be substantially the same.

3. The vehicular article accommodation device according to any of the preceding claims,
wherein the fixing means (35) is formed stretchably and elastically.

4. The vehicular article accommodation device according to any of the preceding claims,
wherein the first and the second locking portions (31, 32), which are located substantially on either end in the direction, in which the first and the second storage recesses (26a, 26b) are lined up in the storage box (27) opening upward, are disposed at levels different from each other in a vertical direction, and the third locking portion (33), which is situated between the first and the second locking portions (31, 32) in the direction, in which the first and the second storage recesses (26a, 26b) are lined up, is disposed at a level lower than the first and the second locking portions (31, 32) at a position substantially between the first and the second storage recesses (26a, 26b).

## Patentansprüche

1. Gegenstandshaltevorrichtung für Fahrzeuge, welche eine Anordnung aufweist, um Gegenständen (40, 41), welche in einem Aufbewahrungsbehälter (27) gelagert sind, zu erlauben, daran unter Verwendung einer Fixierbandeinrichtung (35) fest gelagert zu sein, welche bewirkt, dass beide Enden des Fixierbands lösbar mit Verriegelungsabschnitten (31, 32, 33) in Eingriff sind, welche in dem Aufbewahrungsbehälter (27) vorgesehen sind,
wobei zumindest drei Verriegelungsabschnitte (31 bis 33) an gegenseitig isolierten Positionen (31 bis 33) in dem Aufbewahrungsbehälter (27) vorgesehen sind, wodurch bestimmten Verriegelungsabschnitten (31 bis 33) zum in Eingriff nehmen beider Enden der Fixierbandeinrichtung (35) erlaubt wird, ausgewählt zu werden,
wobei eine erste Aufbewahrungsausnehmung (26a) und eine zweite Aufbewahrungsausnehmung (26b), welche flacher ist als die erste Aufbewahrungsausnehmung (26a) durch eine Wand (29) zusammengefügt werden, und angeordnet sind, um eine gegenseitig kontinuierliche Reihe in dem Aufbewahrungsbehälter (27) zu bilden,
**dadurch gekennzeichnet, dass**
zumindest ein Verriegelungsabschnitt (33) unter den drei Verriegelungsabschnitten (31 bis 33) in dem Aufbewahrungsbehälter (27) an einer Position angeordnet ist, welche im Wesentlichen auf der Wand (29) zwischen den ersten und zweiten Aufbewahrungsausnehmungen (26a, 26b) ist.

2. Die Gegenstandshaltevorrichtung für Fahrzeuge gemäß Anspruch 1,
wobei ein Abstand zwischen einem bestimmten Verriegelungsabschnitt (31) der zumindest drei Verriegelungsabschnitte (31 bis 33) und jedem der verbleibenden Verriegelungsabschnitte (32, 33) eingestellt ist, um im Wesentlichen der gleiche zu sein.

3. Die Gegenstandshaltevorrichtung für Fahrzeuge gemäß irgendeinem der vorhergehenden Ansprüche,
wobei die Fixiereinrichtung (35) dehnbar und elastisch ausgebildet ist.

4. Die Gegenstandshaltevorrichtung für Fahrzeuge gemäß irgendeinem der vorhergehenden Ansprüche,
wobei die ersten und zweiten Verriegelungsabschnitte (31, 32), welche im Wesentlichen an jedem Ende in der Richtung angeordnet sind, in welcher die ersten und zweiten Aufbewahrungsausnehmungen (26a, 26b) in dem Aufbewahrungsbehälter (27), welcher sich nach oben öffnet, aufgereiht sind, an voneinander unterschiedlichen Niveaus in einer vertikalen Richtung angeordnet sind, und der dritte Verriegelungsabschnitt (33), welcher zwischen den ersten und zweiten Verriegelungsabschnitten (31, 32) in der Richtung angeordnet ist, in welcher die ersten und zweiten Aufbewahrungsausnehmungen (26a, 26b) aufgereiht sind, an einem Niveau, welches niedriger ist als die ersten und zweiten Verriegelungsabschnitte (31, 32), an einer Position angeordnet ist, welche sich im Wesentlichen zwischen den ersten und den zweiten Aufbewahrungsausnehmungen (26a, 26b) befindet.

## Revendications

1. Dispositif de réception d'articles pour véhicule ayant un agencement pour permettre aux articles (40,41) stockés dans une boîte de stockage (27) d'être supportés de manière fixe sur celui-ci en utilisant des moyens de bande de fixation (35) amenant les deux extrémités de la bande de fixation à être mises en prise de manière amovible avec des parties de verrouillage (31, 32, 33) prévues dans la boîte de stockage (27),
dans lequel au moins trois parties de verrouillage (31 à 33) sont disposées à des positions mutuellement isolées dans la boîte de stockage (27), permettant de sélectionner des parties de verrouillage (31 à 33) spécifiques pour mettre en prise les deux extrémités des moyens de bande de fixation (35), dans lequel un premier évidement de stockage (26a) et un second évidement de stockage (26b) qui est plus profond que le premier évidement de stockage (26a) sont assemblés par une paroi (29) et sont agencés afin de former une rangée mutuellement continue dans la boîte de stockage (27),
**caractérisé en ce que** :
au moins une partie de verrouillage (33), parmi les trois parties de verrouillage (31 à 33), est située dans la boîte de stockage (27) à une position qui se trouve sensiblement sur la paroi (29) entre les premier et second évidements de stockage (26a, 26b).

2. Dispositif de réception d'articles pour véhicule selon la revendication 1,
dans lequel une distance entre une partie de verrouillage spécifique (31) d'au moins les trois parties de verrouillage (31 à 33), et de chacune des parties de verrouillage restantes (32, 33) est déterminée pour être sensiblement la même.

3. Dispositif de réception d'articles pour véhicule selon l'une quelconque des revendications précédentes,
dans lequel les moyens de fixation (35) sont formés de manière étirable et élastique.

4. Dispositif de réception d'articles pour véhicule selon l'une quelconque des revendications précédentes,
dans lequel les première et seconde parties de verrouillage (31, 32), qui sont situées sensiblement sur chaque extrémité dans la direction dans laquelle les premier et second évidements de stockage (26a, 26b) sont alignés dans la boîte de stockage (27) s'ouvrant vers le haut, sont disposées à des niveaux différents l'un de l'autre dans une direction verticale et la troisième partie de verrouillage (33) qui est située entre les première et seconde parties de verrouillage (31, 32) dans la direction dans laquelle les premier et second évidements de stockage (26a, 26b) sont alignés, est disposée à un niveau inférieur aux première et seconde parties de verrouillage (31, 32) à une position située sensiblement entre les premier et second évidements de stockage (26a, 26b).
